Europäisches Patentamt

European Patent Office

Office européen des brevets

(19)

(11) Veröffentlichungsnummer: **0 131 637**
**B1**

(12) **EUROPÄISCHE PATENTSCHRIFT**

(45) Veröffentlichungstag der Patentschrift:
**24.08.88**

(21) Anmeldenummer: **83106758.2**

(22) Anmeldetag: **09.07.83**

(51) Int. Cl.⁴: **B 29 D 23/00** // B29K21/00

(54) Verfahren und Einrichtung zur Schlauchherstellung.

(43) Veröffentlichungstag der Anmeldung:
**23.01.85 Patentblatt 85/4**

(45) Bekanntmachung des Hinweises auf die Patenterteilung:
**24.08.88 Patentblatt 88/34**

(84) Benannte Vertragsstaaten:
**AT BE CH DE FR GB IT LI LU NL SE**

(56) Entgegenhaltungen:
**CH - A - 585 869**
**DE - A - 2 121 146**
**US - A - 3 859 408**

(73) Patentinhaber: **Fa. Franz A. Parsch GmbH & Co.,**
**Schlauch- und Armaturenfabrik, D-4530 Ibbenbüren (DE)**
Patentinhaber: **Parsch, Peter, Lehrsteinbruch 22,**
**D-4530 Ibbenbüren 1 (DE)**

(72) Erfinder: **Parsch, Wolfgang, Holsterkampstrasse 15,**
**D-4530 Ibbenbüren 1 (DE)**
Erfinder: **Parsch, Peter, Lehrsteinbruch 22,**
**D-4530 Ibbenbüren 1 (DE)**
Erfinder: **Bode, Hubert, Brunnenstrasse,**
**D-4530 Ibbenbüren 1 (DE)**

(74) Vertreter: **Busse & Busse Patentanwälte,**
**Postfach 1226 Grosshandelsring 6, D-4500 Osnabrück**
**(DE)**

## Beschreibung

Die Erfindung betrifft ein Verfahren zum kontinuierlichen Herstellen von innengummierten Gewebeschläuchen, bei dem ein aus Gummi oder gummiähnlichem Material bestehender Innenschlauch mit einem äusseren Gewebeschlauch durch Vulkanisieren oder Kleben innig verbunden wird, wobei der mit dem Innenschlauch ausgestattete Gewebeschlauch vom vorlaufenden Aufwikkelende her mit Druckluft beaufschlagt und mittels dieser Druckluft ab einer ortsfesten Luftsperre aufgeweitet geführt und in diesem Zustand beheizt, gegebenenfalls nachfolgend gekühlt und danach aufgewickelt wird. Die Erfindung bezieht sich auch auf eine Einrichtung zur Durchführung des Verfahrens.

Bei einem bekannten Verfahren dieser Art (DE-A-2 121 146) wird der Gewebeschlauch auf einem Rundwebstuhl gefertigt und der Innenschlauch (Manchon) wird in der Weise in den Gewebeschlauch eingebracht, dass er mit in den Rundwebstuhl einläuft und im Zuge der Herstellung des Gewebeschlauchs umwebt wird. Der so mit dem Innenschlauch ausgestattete Gewebeschlauch (kurz auch Doppelschlauch genannt) läuft vom Webstuhl aus kontinuierlich in eine Station ein, in der er über eine vorgegebene Strecke mit Innendruck beaufschlagt und auf vollen Schlauchquerschnitt aufgeweitet sowie gleichzeitig beheizt wird. Nach anschliessender Druckentlastung wird er als Verbundschlauch aufgewickelt. Dieses bekannte Verfahren ermöglicht es, innengummierte Gewebeschläuche in kontinuierlicher Weise gleichsam endlos herzustellen, zumindest jeweils in grossen Längen. Allerdings wird dabei die Verfahrensgeschwindigkeit von der recht geringen Arbeitsgeschwindigkeit des Webstuhls bestimmt, und jeder Webstuhlstillstand, wie er z.B. durch den Schussspulenwechsel unvermeidlich ist, führt somit auch zu Unterbrechungen des Verfahrens, weil jeweils ein Abschalten der Einrichtung, insbesondere der Heizzone, erforderlich ist, um Materialverbrennungen zu vermeiden. Unterbrechungen im Verfahrensablauf führen aber zu Störstellen im Produkt, insbesondere zu Durchmesserschwankungen, wenn der Schlauch in der Heizstation beim Abkühlen und Aufheizen stehen bleibt. – Überdies ist das vorbekannte Verfahren für die Herstellung von z.B. Feuerlöschschläuchen nicht anwendbar, weil der erzeugte Schlauch, wie jeder vom Webstuhl kommende Schlauch, einen unzulässig hohen Drall hat.

Der Efindung liegt daher die Aufgabe zugrunde, ein Verfahren zum kontinuierlichen Herstellen von innengummierten Gewebeschläuchen, insbesondere auch Feuerlöschschläuchen, zu schaffen, das einen Durchlauf ohne Unterbrechungen bzw. Stillstandzeiten ermöglicht, eine hohe Arbeitsgeschwindigkeit zulässt und eine grosse Flexibilität in bezug auf unterschiedliche Schlauchdurchmesser und auch in bezug auf zusätzlich gewünschte Ausseneinfärbungen oder Aussenbeschichtungen aufweist.

Diese Aufgabe wird erfindungsgemäss durch die im Kennzeichen des Patentanspruchs 1 angegebenen Massnahmen gelöst. Weitere Ausgestaltungen und Einzelheiten des erfindungsgemässen Verfahrens sind in den Ansprüchen 2 bis 4 angegeben.

Die zur Durchführung des erfindungsgemässen Verfahrens vorgesehene Einrichtung zeichnet sich noch besonders vorteilhaft aus durch die in den Ansprüchen 5 und 6 angegebenen Merkmale, die insoweit ebenfalls noch Gegenstand der Erfindung sind.

Insgesamt ermöglicht die Erfindung ein unterbrechungsloses Durcharbeiten der Anlage, weil endlos Teilstücke (unterschiedlicher Längen und auch unterschiedlicher Durchmesser) angekoppelt werden können. Dadurch, dass die Erfindung einen kontinuierlichen Durchlauf ohne Unterbrechungen bzw. Stillstandszeiten ermöglicht, lässt sich auch zusätzlich ein Einfärben und ein Aussenbeschichten des Schlauches erreichen (jeder Stillstand würde diesbezüglich zu Unregelmässigkeiten führen).

Die Erfindung ermöglicht ferner dadurch, dass eine Entdrallung erst unmittelbar vor dem Eintritt des Schlauches in den Verfahrensablauf vorgenommen und dann der Schlauch sogleich in der entdrallten Position mit der Vulkanisation fixiert wird, die Herstellung normgerechter Feuerlöschschläuche. Und dadurch, dass der Beginn des Verfahrensablaufs mittels eines Zugschlauches eingeleitet wird, ist es möglich, das Aufheizen und Anfahren der Anlage durchzuführen, ohne dass sich von dem zu erzeugenden Schlauch eine der Durchlauflänge der Gesamtanlage entsprechende Schlauchlänge bereits in der Anlage befindet und als Ausschuss verloren geht. Das ist gerade deshalb von Belang, weil bei einer nach der Erfindung arbeitenden Einrichtung die Arbeitsgeschwindigkeit nur von der Länge der Anlage abhängig ist, so dass bei einer auf grosse Durchlaufgeschwindigkeit ausgelegten und damit auch eine grosse Durchlauflänge (sei es hintereinander, sei es in Über- oder Nebeneinanderanordnung) aufweisenden Anlage beim Anfahren jeweils es auch beträchtliche Ausschuss-Längen geben würde.

Der Gegenstand der Erfindung wird nachstehend anhand einer Zeichnung näher erläutert, die schematisch die Einrichtung zur Vulkanisation oder Klebung und zur gegebenenfalls gewünschten Aussenbeschichtung des innengummierten Gewebeschlauchs im Quasi-Endlosverfahren veranschaulicht.

Die Einrichtung umfasst folgende für einen horizontalen Durchlauf des Schlauches hintereinander angeordnete Stationen: Ein karussellartig ausgebildetes Entdrallungsgerät 1, eine Einbindevorrichtung 2 zum Verbinden von Schlauchenden, eine Vorschub- und Bremsvorrichtung 3, eine Luftabquetschvorrichtung 4, eine Beschichtungsvorrichtung 5, eine Heizzone 6, ein Schlauch-Dichtigkeitsprüfgerät 7, einen Extruder 8, eine Wasser-Abschreckvorrichtung 9, eine Kühlzone 10 und wenigstens eine Schlauch-Aufwickeltrommel 11. Dieser Fertigungsstrasse unmittelbar nachgeordnet ist vorteilhaft eine weitere Schlauch-Aufwickeltrommel 12 sowie eine Abzugsvorrichtung 13, ein Abmess- und Kontrolltisch 14 und eine Schlauchwickelmaschine 15.

Die Arbeitsweise der Einrichtung ist wie folgt: In das karussellartige Entdrallungsgerät 1 wird ein endliches Teilstück von z.B. einigen tausend Meter Länge oder aber auch kürzere Längen, die schon mal beim Weben anfallen, eines von einem Rundwebstuhl erzeugten und dort auch bereits mit dem Manchon ausgestatteten Gewebeschlauches eingegeben und mit seinem Vorlaufende durch die Vorschub- und Bremsvorrichtung 3 bis in die Luftabquetschvorrichtung 4 geführt. Die Luftabquetschvorrichtung 4 ist nach Art einer Schleuse ausgebildet und umfasst zwei im Abstand voneinander angeordnete Walzenpaare 4', 4'', die jeweils gegeneinander verstellbar sind. Zweckmässig sind die Walzenpaare 4', 4'' von Gummiwalzen gebildet. Nachdem das Vorlaufende des Schlauchs durch das erste Walzenpaar 4' in Offenstellung hindurchgeführt worden ist, wird dieses Walzenpaar geschlossen, womit das Vorlaufende des Schlauchs vom übrigen Teil mit einer Luftsperre abgesetzt ist.

Die Schlauch-Aufwickeltrommel 11, die je nach Trommelgrösse ein Aufwickelvolumen von einigen tausend Meter Länge hat, ist in einem entsprechenden Gestell drehbar gelagert und von einem Motor antreibbar. Der Antriebsmotor für die Schlauch-Aufwickeltrommel 11 sowie die Vorschub- und Bremsvorrichtung 3 sind über eine elektronische Steuereinrichtung miteinander verkoppelt, und zwar so, dass innerhalb der Einrichtung zwischen den beiden Stationen 3 und 11 der Schlauch eine stets konstante Durchlaufgeschwindigkeit einhält. Die Nabe der Schlauch-Aufwickeltrommel 11 ist als Hohlnabe ausgeführt und an eine Druckluftquelle angeschlossen. Auf der Nabe und luftdicht an diese angeschlossen befindet sich ein Zugschlauch.

Zur Einleitung des Verfahrens wird der Zugschlauch von der Aufwickeltrommel 11 abgezogen und durch die Einrichtung von hinten her hindurchgeführt, bis sich sein freies Ende ebenfalls in der Luftabquetschvorrichtung 4 im Bereich zwischen den Walzenpaaren 4' und 4'' befindet. Sodann wird das vorlaufende Ende des mit dem Manchon ausgestatteten Gewebeschlauchs und das freie Ende des Zugschlauchs in der Luftabquetschvorrichtung 4 zwischen den beiden geschlossenen Walzenpaaren 4' und 4'' luftdicht miteinander verbunden werden. Dann wird der Zugschlauch mit Druckluft beaufschlagt, das Walzenpaar 4'' geöffnet, während das Walzenpaar 4' geschlossen bleibt, womit das vorlaufende Ende des Gewebeschlauchs mit dem Manchon mit Innendruck beaufschlagt ist. Nunmehr wird die Einrichtung angefahren, d.h. die Vorschub- und Bremseinrichtung 3 sowie der Antrieb der Schlauch-Aufwickeltrommel 11 laufen an, womit der mit dem Manchon ausgestattete Gewebeschlauch kontinuierlich und mit gleichbleibender Geschwindigkeit aus dem Entdrallungsgerät 1 abgezogen wird und jeweils nach dem Passieren des Quetschwalzenpaares 4' die volle Druckluftbeaufschlagung seines Gummi-Innenschlauchs erhält. Die von der Aufwickeltrommel 11 her kommende und über den Zugschlauch zugeführte Druckluftbeaufschlagung ist so bemessen, dass – in Durchlaufrichtung gesehen – im gesamten Bereich hinter der Luftabquetschvorrichtung 4 bis hin zur Schlauch-Aufwickeltrommel 11 und dem auf der Trommel befindlichen Schlauch im Innenschlauch ein Luftdruck von etwa 4 bar erzeugt und konstant aufrechterhalten wird, während im Bereich vor der Luftabquetschvorrichtung 4, also vor dem geschlossenen Quetschwalzenpaar 4', ein Luftdruck von etwa 0,5 bar vorhanden ist, der sich über das in dem Entdrallungsgerät befindende freie Schlauchende hin abbaut.

Nach dem Verlassen der Luftabquetschvorrichtung 4 durchläuft der Gewebeschlauch mit seinem unter dem Innendruck stehenden Manchon zunächst die Beschichtungsvorrichtung 5, in der auf den Gewebeschlauch ausser Farbpigmente und Kleber für eine später aufzubringende Aussenbeschichtung aufgetragen werden. Sodann läuft der Schlauch in die Heizzone 6 ein, die vorzugsweise von einem konzentrisch mit Infrarot-Strahlern bestückten Rohrstrang gebildet wird. In der Heizzone 6 wird der Schlauch von aussen mit etwa 180 °C beheizt. Damit der die Heizzone 6 passierende Schlauch möglichst von Eintritt bis Austritt gleichmässig mit etwa 180 °C beheizt wird, sind die Infrarot-Strahler in der Heizzone in Stärke und/oder Anzahl zweckmässig entsprechend gestaffelt angeordnet, so dass im Einlaufbereich eine höhere Temperatur zur schnellen Aufheizung auf 180 °C erzeugt wird, die dann im weiteren Verlauf konstant aufrechterhalten bleibt. Die Länge der Heizzone 6 ist so ausgelegt, dass der unter dem Innendruck von 4 bar stehende Schlauch bei einer Geschwindigkeit von etwa 8 m/min für etwa 2 min der Temperatur von 180 °C ausgesetzt wird, was einer Länge der Heizzone von etwa 16 m entspricht. Dabei vulkanisiert oder klebt der Manchon an die Innenfläche des Gewebeschlauchs an und geht mit dieser eine innige Verbindung ein. – Statt der Infrarot-Strahler könnte die Heizzone 6 auch mit Heissluft, Heissdampf oder anderer Wärmeenergie versorgt werden.

Am Ende der Heizzone bzw. dieser unmittelbar nachgeordnet ist das Dichtigkeitsprüfgerät 7 vorgesehen, das vom Schlauch durchlaufen wird und eine Kammer umfasst, in der etwaige Schlauchundichtigkeiten durch ausströmende Luft zu einer Erhöhung des Luftdrucks führen, was vom Gerät sofort angezeigt wird und entsprechend markiert werden kann.

Anschliessend wird der immer noch heisse Schlauch, auf dessen Aussenflächen sich der aufgeschmolzene pigmentierte Kleber befindet, durch den Extruder 8 geführt, in dem er einen aus einer Kunststoff-Schmelze bestehenden, geglätteten Aussenauftrag erhält, der in der unmittelbar nachgeordneten Wasser-Abschreckvorrichtung 9 zur Vermeidung von Blasenbildung auf der Aussenhaut rasch abgekühlt wird.

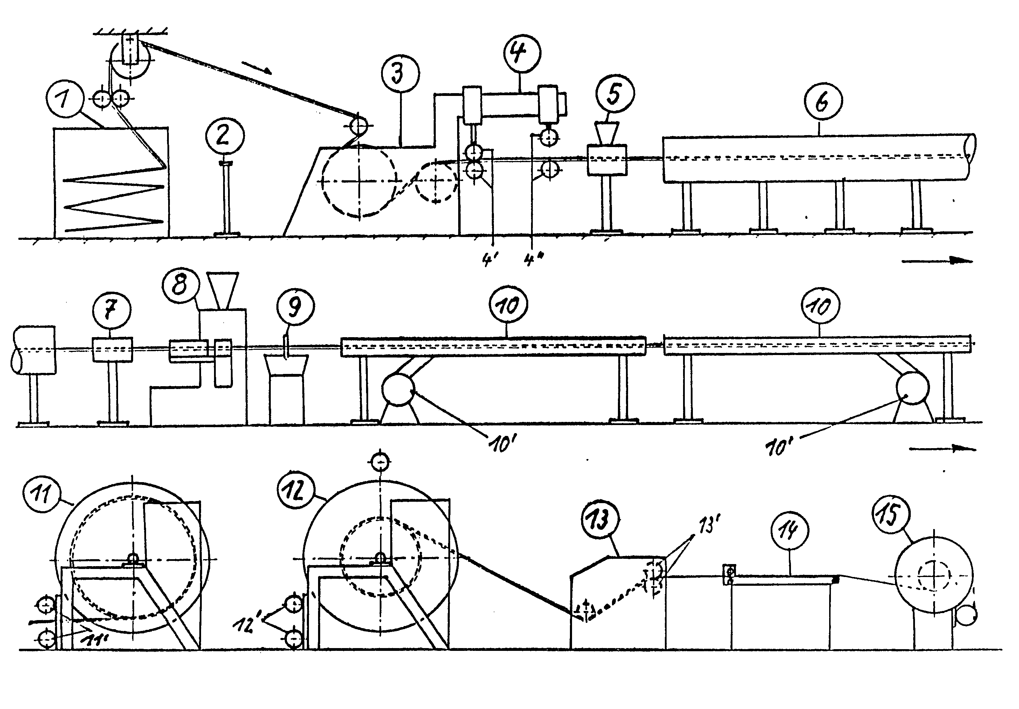

Sodann durchläuft der Schlauch die Kühlzone 10, die aus einem oder mehreren axial mit Luft beschickten Rohrsträngen besteht, wie dies in der Zeichnung durch die mit 10' bezeichneten Gebläse veranschaulicht ist. Die Kühlzone 10 ist so bemessen, dass der Schlauch nach ihrem Verlassen insgesamt auf etwa Raumtemperatur abgekühlt ist und so der Schlauch-Aufwickeltrommel 11 zugeführt wird. Damit ist vermieden, dass der Schlauch beim Aufwickeln die Kontur der Aufwickeltrommel annimmt.

Die Schlauch-Aufwickeltrommel 11 hat, je nach Trommelgrösse ein Fassungsvermögen bzw. Aufwickelvolumen von mehreren tausend Metern Länge, was im Falle der Eingabe kürzerer endlicher Schlauchlängen in das Entdrallungsgerät 1 bedeutet, dass zur Aufrechterhaltung des kontinuierlichen Betriebs der Einrichtung hin und wieder das nachlaufende Ende des aus dem Entdrallungsgerät 1 abgezogenen Schlauchs mit dem vorlaufenden Ende eines weiteren in das Entdrallungsgerät eingegebenen endlichen Schlauch-Teilstücks verbunden werden muss. Dies geschieht in der Einbindevorrichtung 2, in der die Schlauchenden mittels starrer Verbindungshülsen für die Endlosfertigung luftdicht miteinander verbunden werden. Hieran anschliessend wird jeweis die Luftabquetschvorrichtung 4 so betätigt, dass zunächst das Walzenpaar 4'' schliesst und das Walzenpaar 4' sich öffnet, bis die Verbindungshülse das Walzenpaar 4' passiert hat; dann schliesst das Walzenpaar 4' wieder, und es öffnet sich das Walzenpaar 4''. Die Verbindungshülse kann somit die Luftabquetschvorrichtung 4 jeweils ungehindert passieren, ohne dass ein nennenswerter Druckverlust in dem die Einrichtung durchlaufenden Schlauch eintritt.

Ist das Fassungsvermögen der Aufwickeltrommel 11 erreicht, so bedeutet dies nicht notwendig eine Stillsetzung oder Unterbrechung des Herstellvorgangs. Vielmehr kann Fertigung mittels einer oder mehrerer weiterer Aufwickeltrommeln 12 fortgesetzt werden, und zwar auf folgende Weise: Ein am Gestell der Aufwickeltrommel 11 vorgesehenes Quetschwalzenpaar 11' wird geschlossen, so dass in dem innerhalb der Einrichtung befindlichen Schlauch der Innendruck erhalten bleibt, während das hinter dem Quetschwalzenpaar 11' befindliche Schlauchstück durchtrennt und mit seinem vorlaufenden Ende an den von der nachgeordneten Aufwickeltrommel 12 abgezogenen Zugschlauch luftdicht angebunden wird, wobei ein dort ebenfalls vorhandenes Quetschwalzenpaar 12' in die Geschlossenstellung gefahren ist, um zwischen den beiden Quetschwalzenpaaren 11', 12' im wesentlichen drucklos eine schnelle Verbindung zwischen dem freien Ende des Zugschlauchs der Aufwickeltrommel 12 mit dem hinter dem Quetschwalzenpaar 11' befindliche, abgetrennten Endes des Schlauchs herbeiführen zu können. Unmittelbar nach Herstellung dieser Verbindung werden die Quetschwalzenpaare 11', 12' wieder geöffnet und der Antrieb der Aufwickeltrommel 12 in Gang gesetzt, womit die Fertigung ihren Fortgang nimmt, und zwar unter Druckluftbeaufschlagung durch den Zugschlauch der Aufwickeltrommel 12, der in gleicher Weise, wie dies oben für die Aufwickeltrommel 11 geschildert wurde, an die von einer Druckluftquelle aus beaufschlagte Hohlnabe der Aufwickeltrommel 12 angeschlossen ist. Das abgetrennte letzte Ende des auf der Aufwickeltrommel 11 aufgewickelten fertigen Schlauchs wird in geeigneter Weise verschlossen, wie z.B. durch Abbinden, so dass der im aufgewickelten Schlauch befindliche Innendruck im wesentlichen erhalten bleibt.

Bei der in der Zeichnung dargestellten Ausführung der Einrichtung mit zwei Aufwickeltrommeln 11 und 12 ist angenommen, dass zunächst auf die Aufwickeltrommel 12 produziert wurde und nach Erreichen deren Fassungsvermögens in der zuvor beschriebenen Weise auf die Aufwickeltrommel 11 umgeschaltet wurde, diese sich also gerade im Produktionsprozess befindet. Während dieser Zeit kann von der vollen Aufwickeltrommel 12 der fertiggestellte Schlauch abgewickelt und vermessen werden. Hierzu ist die nachgeordnete Abzugsvorrichtung 13 mit zumindest einem Quetschwalzenpaar 13' als Luftsperre vorgesehen, die es ermöglicht, den auf der Aufwickeltrommel 12 (oder 11) befindlichen Schlauch auch während des Abwickelns unter Innendruck zu halten, damit die auf der Trommel befindlichen Schlauchlagen nicht durcheinander geraten. Der Abzugsvorrichtung 13 mit den Quetschwalzen 13' ist der Abmess- und Kontrolltisch 14 nachgeordnet, auf dem der abgewickelte Schlauch ein Längenmesswerk durchläuft und gleichzeitig einer Sichtkontrolle unterzogen wird. Mit der nachgeordneten Schlauchwickelmaschine 15 werden die bedarfsweise unterschiedlichen, verkaufsfertigen Schlauchlängen, wie sie auf dem Tisch 14 abgemessen und abgetrennt wurden, aufgerollt, bandagiert und anschliessend dem Versand zugeführt.

Bei Durchführung des Verfahrens in der geschilderten Weise und mit der in der Zeichnung dargestellten Einrichtung erhält man als Endprodukt einen Gewebeschlauch, der im Innern mit einer einvulkanisierten Innengummierung versehen ist und ausserdem eine Kunststoff-Aussenbeschichtung aufweist. Vulkanisation und Aussenbeschichtung werden dabei im Zuge eines ineinander geschachtelten Herstellungsvorganges verwirklicht. – Für eine grosse Zahl von Anwendungsfällen ist allerdings eine Aussenbeschichtung des Gewebeschlauchs nicht erforderlich. Dann sind die Beschichtungsvorrichtung 5 sowie der Extruder 8 mit der nachgeordneten Wasser-Abschreckvorrichtung 9 entbehrlich bzw. werden ausser Wirkung gesetzt, womit sich als Endprodukt ein im Wege der Endlosvulkanisation mit einer Innengummierung versehener Gewebeschlauch ergibt.

**Patentansprüche**

1. Verfahren zum kontinuierlichen Herstellen von innengummierten Gewebeschläuchen, bei dem ein aus Gummi oder gummiähnlichem Material bestehender Innenschlauch mit einem äusseren Gewebeschlauch durch Vulkanisieren oder Kleben innig verbunden wird, wobei der mit dem Innenschlauch ausgestattete Gewebeschlauch vom vorlaufenden Aufwickelende her mit Druckluft beaufschlagt und mittels dieser Druckluft ab einer ortsfesten Luftsperre aufgeweitet geführt und in diesem Zustand beheizt, gegebenenfalls nachfolgend gekühlt und danach aufgewickelt wird, dadurch gekennzeichnet, dass der mit dem Innenschlauch ausgestattete Gewebeschlauch dem Verfahrensablauf in Form vorgefertigter endlicher Teilstücke zugeführt wird, die jeweils zunächst entdrallt und unmittelbar anschliessend mit ihrem vorlaufenden Ende im Bereich der Luftsperre mit dem nachlaufenden Ende eines vorherigen, bereits im Verfahrensablauf befindlichen Teilstücks luftdicht verbunden werden, wobei zu Beginn des Verfahrensablaufs das vorlaufende Ende des ersten entdrallten Teilstücks luftdicht an einem vom Aufwickelende her mit Druckluft beaufschlagten Zugschlauch angeschlossen, von diesem durch die Verfahrensstationen hindurchgezogen und mit diesem aufgewickelt wird.

2. Verfahren nach Anspruch 1, dadurch gekennzeichnet, dass der mit dem Innenschlauch ausgestattete Gewebeschlauch vor dem Einlauf in die Heizzone aussen mit einem Auftrag von Farbpigmenten und Kleber und nach dem Verlassen der Heizzone mit einer Kunststoffschmelze als Aussenbeschichtung versehen und anschliessend abgeschreckt wird und dann in die Kühlzone einläuft.

3. Verfahren nach Anspruch 1 oder 2, dadurch gekennzeichnet, dass der mit einem Innendruck von etwa 4 bar beaufschlagte Schlauch in der Heizzone bei einer Geschwindigkeit von etwa 8 m/min für etwa 2 min einer Temperatur von etwa 180 °C ausgesetzt wird.

4. Verfahren nach einem oder mehreren der Ansprüche 1 bis 3, dadurch gekennzeichnet, dass der Schlauch in der Kühlzone auf etwa Raumtemperatur abgekühlt und mit dieser Temperatur aufgewickelt wird.

5. Einrichtung zur Durchführung des Verfahrens nach Anspruch 1, die für einen horizontalen Durchlauf des Schlauchs zumindest folgende hintereinander angeordnete Stationen aufweist: eine Vorschub- und Bremsvorrichtung (3), eine Luftabquetschvorrichtung (4), einen konzentrische Wärmeenergie von aussen auf den Schlauch aufbringenden Kanal zur Bildung einer Heizzone (6), einen oder mehrere axial mit Luft beschickte Kanäle zur Bildung einer Kühlzone (10) sowie wenigstens eine drehbar gelagerte und antreibbare Schlauch-Aufnahmetrommel (11) mit über die Nabe erfolgender Druckluftbeaufschlagung eines daran befestigten Schlauchteils, dadurch gekennzeichnet, dass als erste Station der Einrichtung ein jeweils den mit dem Innenschlauch ausgestatteten Gewebeschlauch als Teilstück endlicher Länge aufnehmendes, karussellartig ausgebildetes Entdrallungsgerät (1) vorgesehen ist.

6. Einrichtung nach Anspruch 5, bei der als Luftabquetschvorrichtungen (4; 13') paarweise angeordnete, gegeneinander verstellbare Gummiwalzen vorgesehen sind, dadurch gekennzeichnet, dass die der Vorschub- und Bremsvorrichtung (3) nachgeordnete Luftabquetschvorrichtung (4) nach Art einer Schleuse ausgebildet ist und zwei mit horizontalem Abstand voneinander angeordnete Walzenpaare (4', 4'') umfasst.

**Claims**

1. A method for the continuous production of internally rubberized fabric hoses wherein an inner hose consisting of rubber or rubber-like material is intimately connected, by vulcanizing or adhesion, to an outer fabric hose, during which the fabric hose equipped with the inner hose is acted upon by compressed air from the advancing winding-up end and is guided, widened by means of this compressed air, from a stationary air stop onwards and, in this state, is heated, possibly subsequently cooled and then wound up, characterised in that the fabric hose equipped with the inner hose is supplied to the processing cycle in the form of prefabricated finite pieces, each of which is first untwisted and immediately afterwards connected, in an airtight manner, by its leading end, in the region of the air stop, to the trailing end of a preceding piece already in the processing cycle, while at the beginning of the processing cycle, the leading end of the first untwisted piece is connected, in an airtight manner, to a draw hose acted upon with compressed air from the winding-up end, is pulled through the processing stations by this and is wound up with this.

2. A method according to claim 1, characterised in that the fabric hose equipped with the inner hose is provided externally, before entering the heating zone, with a coating of colouring pigments and adhesive and, after leaving the heating zone, with a plastics melt as an outer coating and is subsequently quenched and then enters the cooling zone.

3. A method according to claim 1 or 2, characterised in that the hose acted upon with an internal pressure of about 4 bar is exposed to a temperature of about 180° for about 2 minutes in the heating zone, with a speed of about 8 m/min.

4. A method according to any one or more of the claims 1 to 3, characterised in that the hose is cooled down to about room temperature in the cooling zone and is wound up with this temperature.

5. A device for carrying out the method according to claim 1, which comprises at least the following stations disposed one behind the other for a horizontal passage through of the hose: a feed and brake device (3), an air squeezing-off device (4), a channel applying concentric thermal energy to the hose from the outside to form a heating zone (6), one or more channels charged axially with air to form a cooling zone (10) and at least one rotatably mounted hose take-up drum (11) which can be driven and has compressed-air admission, effected through the hub, to a hose portion secured thereto, characterised in that an untwisting device (1) of turntable-like construction, which receives each fabric hose equipped with the inner hose as a piece of finite length, is provided as the first station of the device.

6. A device according to claim 5 wherein rubber rollers which are arranged in pairs and are adjustable in relation to one another are provided as air squeezing-off devices (4; 13'), characterised in that the air squeezing-off device (4) following the feed and brake device (3) is constructed in the form of a lock and comprises two pairs of rollers (4', 4'') arranged with horizontal spacing apart.

**Revendications**

1. Procédé pour la fabrication en continu de tuyaux souples en tissu caoutchoutés intérieurement, suivant lequel un tuyau intérieur en caoutchouc ou en une matière semblable au caoutchouc est uni intimement, par vulcanisation ou collage, à un tuyau extérieur en tissu, le tuyau en tissu pourvu du tuyau intérieur étant alimenté au moyen d'air comprimé à partir de l'extrémité d'envidage de tête et étant transporté à l'état dilaté par cet air comprimé à partir d'un blocage d'air à position fixe, puis étant chauffé dans cet état, et éventuellement refroidi puis envidé, caractérisé en ce que le tuyau en tissu muni du tuyau intérieur est fourni en vue du procédé sous forme de longueurs finies préparées qui sont chacune en premier lieu débarrassées de leur torsion, puis immédiatement raccordées de manière étanche à l'air par leur extrémité de tête se trouvant dans la région du blocage d'air à l'extrémité de queue d'une longueur précédente déjà soumise au procédé, l'extrémité de tête de la première longueur débarrassée de la torsion étant, au début du procédé, raccordée de manière étanche à l'air à un tuyau de tirage alimenté en air comprimé à partir de l'extrémité d'envidage, étant tirée par celui-ci à travers les postes du procédé et étant envidée avec celui-ci.

2. Procédé suivant la revendication 1, caractérisé en ce qu'avant son entrée dans la zone de chauffage, le tuyau en tissu pourvu du tuyau intérieur reçoit extérieurement une couche de pigments colorés et d'adhésif, tandis qu'après sa sortie de la zone de chauffage, il est pourvu d'un enrobage extérieur constitué d'une matière plastique fondue et est ensuite refroidi brusquement puis introduit alors dans la zone de refroidissement.

3. Procédé suivant la revendication 1 ou 2, caractérisé en ce que le tuyau souple soumis à une pression interne d'environ 4 bars est exposé dans la zone de chauffage à une température d'environ 180 °C pendant environ 2 minutes, pour une vitesse d'environ 8 mètres par minute.

4. Procédé suivant l'une quelconque des revendications 1 à 3, caractérisé en ce que le tuyau souple est refroidi dans la zone de refroidissement environ jusqu'à la température ambiante et est envidé à cette température.

5. Installation pour la mise en œuvre du procédé suivant la revendication 1 qui comporte, en vue d'un passage horizontal du tuyau souple, au moins les postes suivants montés en succession: un dispositif d'avancement et de freinage (3), un dispositif pinceur bloquant l'air (4), un canal apportant concentriquement de l'énergie thermique de l'extérieur au tuyau souple pour former une zone de chauffage (6), un ou plusieurs canaux alimentés axialement en air pour former une zone de refroidissement (10) ainsi qu'au moins un tambour récepteur de tuyau souple (11) monté à rotation et pouvant être entraîné dont le moyeu assure l'alimentation en air comprimé d'une section de tuyau souple qui y est fixée, caractérisé en ce qu'un appareil suppresseur de torsion (1), ayant la forme d'un carrousel recevant chaque longueur finie de tuyau en tissu pourvu du tuyau intérieur est prévu à titre de premier poste de l'installation.

6. Installation suivant la revendication 5, dans laquelle des rouleaux en caoutchouc déplaçables l'un par rapport à l'autre montés par paires sont prévus à titre de dispositifs pinceurs bloquant l'air (4; 13'), caractérisé en ce que le dispositif pinceur bloquant l'air (4) monté en aval du dispositif d'avancement et de freinage (3) est construit comme un sas et comprend deux paires de rouleaux (4', 4'') disposées horizontalement à une certaine distance l'une de l'autre.